# EUROPEAN PATENT SPECIFICATION

(11) **EP 0 509 996 B1**
(45) Date of publication and mention of the grant of the patent: **06.11.1996**
(21) Application number: 90912419.0
(22) Date of filing: 19.07.1990
(51) Int. Cl.: G06F 3/033

(54) **COMPUTER APPARATUS FOR BRUSH STYLED WRITING**
RECHNER FÜR PINSELMODELLIERTES SCHREIBEN
ORDINATEUR EQUIPE D'UN SYSTEME PERMETTANT D'ECRIRE AU PINCEAU

(30) Priority: 08.01.1990 US 462001
(43) Date of publication of application: 28.10.1992
(73) Proprietor: WANG LABORATORIES, INC., Billerica, MA 01821 (US)
(72) Inventor: DONOGHUE, Karen, Melrose, MA 02176 (US); KNOWLTON, Kenneth, G., Merrimack, NH 03054 (US)
(74) Representative: Behrens, Dieter, Dr.-Ing.
(86) International application number: US9004069
(87) International publication number: WO9110952

(56) References cited:
- EP-A- 0 367 405
- Proceedings of the 1988 IEEE International Conference on Systems, Man, and Cybernetics, 8-12 August 1988, Beijing and Shenyang, China, volume 1, International Academic Publishers, IEEE, C.-M. Shi et al.: "An input method of calligraphic characters using pressure sensing pen", pages 369-372 see the whole article

## Description

### Background of the Invention

"Calligraphy" is the art of fine writing. Nowadays in various countries throughout the world, writing for practical purposes is done using pencil or pen, though brush and ink calligraphy is still widely practiced as a separate art. In the Western culture, calligraphy is typically performed using a rigid broad edged pen. An old English style print is one of the most commonly used styles of Western calligraphy. In this style, stroke width of a character varies usually at the ends of a linear stroke and/or along a portion of a curved stroke. This is accomplished by stroke width being a function of the direction in which the pen is travelling, the angle at which the nib (rigid broad edge) is held with respect to a horizontal axis on the writing surface, and to some degree, force applied to the pen. Some characters require a turning or twisting of the pen between the fingers to vary stroke width in appropriate positions.

In Asian cultures, particularly in China and Japan, calligraphy is typically performed using a simple brush formed of a handle and bristles attached to one end of the handle. Chinese or Japanese calligraphy is called-Kanji. Each Kanji character is comprised of a number of strokes where the ordering of the strokes and their form is strictly defined by the type of script to which the character belongs. Some characters are so complicated that they are comprised of more than 30 strokes.

Most, if not all, calligraphy is still performed by brush and ink as described above. One of the problems of inputting calligraphy into a computer system, and more generally of data processing in Asian cultures, is the difficulty in entering Asian calligraphy through a keyboard. Generally in data processing in Asian cultures, a single character is broken down into its constituent strokes and each stroke corresponds to a key on a typical keyboard. Depending on the complexity of the character there can be few or many keystrokes needed to enter a single character. The complexity of an average Kanji character and the thousands of characters in the language make inputting data for a form, for example, an extremely difficult task for someone who is not an expert Kanji typist. Hence, there is a need for a less complicated method for inputting Kanji (calligraphy) characters into a computer system.

Inputting devices other than the keyboard have been considered but with little to no advantage. Kanji characters made with a ball point pen or other non-force-sensitive writing implement lack proper visual feedback. C.G. Leedham and A.C. Downton in "On-line Recognition of Pittman's Handwritten Shorthand - an Evolution of Potential", International Journal of Man-Machine Studies, Volume 24, Pages 375-393 (1986) showed that the lack of proper visual feedback affects writing dynamics and changes writing style, as well as the process of stroke creation. Using a ball point pen to create a syntactically correct, force sensitive Kanji stroke would require the writer to scribble over sections of the stroke in order to show variability in stroke thickness. Of course, force sensing is not enough to provide perfectly realistic visual feedback, but it aids in providing visual feedback closer to what the writer expects.

Most "brushes" in computer-based paint systems are incapable of giving realistic brush stroke feedback dependent on force applied to the brush, size and shape of the brush, and speed of brush stroke. In addition,most "brushes" in computer based paint systems use a single static drawing primitive repeatedly drawn as a function of the movement of the input device. In some systems such as FullPaint (from Ann Arbor Softwares, Inc.) and SuperPaint (copyright 1986, Bill Snyder) available for the MacIntosh of Apple Computer, Inc. as the input device, the mouse, moves from point A to point B, the entire path joining the two points is filled with "paint". The user can not dynamically change drawing primitives during the creation of a stroke, except by going to a menu and choosing a submenu for brush shape and/or size. In other computer based paint systems, the single primitive itself is drawn at each sample point, giving a non-continuous series of dots or filled circles, or whatever geometric shape the drawing primitive happens to be.

Further, computer based paint systems that use a 2-D mouse as their input device are not capable of expressing stroke width as a function of force. For applications that require the input device to be sensitive to force, these computer based paint systems do not work well. Steve Strassman in "Hairy Brushes", SIGGRAPH Proceedings 1986, Volume 20, No. 4, Pages 225-232, modelled a non-real-time brush as a compound object composed of bristles, and kept track of the physical state of the brush and remaining amount of ink over the course of the stroke. Strassman's "stroke" is described as a path whose constituting control points each have a force value associated with them. The force value for each control point is input by the user through the keyboard.

In "An Input Method of Calligraphic Characters Using Pressure Sensing Pens" by Chong-Ming Shi *et al., Proceedings of the 1988 IEEE International Conference on* *Systems, Man and Cybernetics,* August 8-12, 1988, Bejing and Shenyang, China, pp 369-372, a force or pressure sensing stylist operable on a writing surface is disclosed. Images of brush strokes corresponding to the brush imitating operation of the stylist are displayed, where the width of the output brush strokes vary as a function of the force applied on the stylist. Each brush stroke is formed of a series of generally tear dropped shaped touch patterns. The general tear drop shape is formed of a front body portion and a brush tip. The front body portion does not change shape and generally dictates the width of the touch pattern. Hence, the brush tip portion changes in shape and orientation as a function of the direction of movement of the stylist. Thus, the overall touch pattern shape changes in form and orientation as a function of the direction of movement of the stylist, and the overall size of the touch pattern changes as a function of force/pressure detected by the stylist. As a result, output strokes simulate calligraphic brush strokes having a width varying as a function of stylist pressure and reduced zigzags between sample points (touch patterns).

The limitation with the system disclosed by Shi *et al.* is that only a one dimensional aspect (i.e., width) of generated brush strokes is determined as a function of stylist force. Further, Shi *et al.* uses only one aspect of the operation of the stylist on the working surface (i.e., force) to vary geometric characteristics of the brush stroke images.

Accordingly there is a need for a computer based system for brush writing (i.e. calligraphy).

### Summary of the Invention

The present invention provides a computer writing apparatus in accordance with claims 1 to 9. To support the writing apparatus, the data processing system includes a digital processor, a stylus coupled to the digital processor, processor means, a display unit (e.g. a video display), and a hard copy output means, such as a local and/or remote printer. The stylus is operable on a working surface in a brush imitating manner. During operation of the stylus in a brush imitating manner, signals are generated for the processor means and are indicative of strokes the user has defined with the stylus on the working surface. In response to the generated signals, the processor means establishes, in real time, images of brushed strokes which correspond to the brush imitating operation of the stylus. The processor means displays the established images of brushed strokes on the video display unit of the data processing system

The signals generated during operation of the stylus include a force signal and signals indicative of direction of stylus movement, length of time the stylus has been in contact with the working surface, distance the stylus has travelled while being in contact with the working surface and/or some other stroke defining parameter. The processing means provides images of brushed strokes with geometric characteristics (e.g. sizes, shapes and orientation) that vary as a function of one or more of the generated signals. In particular, force detecting means are coupled to the processor means for detecting the force exerted between the stylus and working surface during operation of the stylus. The processing means provides images of brushed strokes with geometries (e.g. shape, size and/or widths) that vary as a function of detected force.

Further, the function for determining dependent geometric characteristics (e.g. shape and/or width) of a brushed stroke from detected parameters of stylus operation (e.g. force) is user definable. That is, the function for mapping a force measurement into a brushed stroke width in one embodiment is user definable. This is accomplished through a graph view displayed on the display unit of the data processing system. The graph view provides orthogonal axes,one for indicating force and the other for indicating brushed stroke width. To define a desired function of force to brushed stroke width, the user draws in the graph view a curve indicative of the desired relationship between force and stroke width.

In a further aspect of the present invention, the images of brushed strokes provided by the processor means are each defined by a series of teardrop shaped elements or primitives. In a preferred embodiment, each teardrop shaped element is oriented with the teardrop tip at 135° from the right hand horizontal. And each teardrop shaped element approximates the consolidated shape of brush bristles in contact with the writing surface when a brush is held in correct Kanji form.

Each teardrop shaped element is defined by a plurality of points around its perimeter. A subroutine employed by the processor means for forming each brushed stroke image on a bitmap (i) determines points of the teardrop shaped elements which lie on a perimeter boundary enclosing successive teardrop shaped elements, (ii) establishes with the determined points trapezoidal areas within and including the perimeter boundary, and (iii) sets pixels in a pattern corresponding to the established trapezoidal areas.

Alternatively, the images of brushes strokes provided by the processor means are each formed of a series of lines of variable lengths. Each line is defined by a plurality of points and has a length determined by detected force between the stylus and working surface during operation of the stylus. The subroutine employed by the processor means forms each brushed stroke image on a bitmap by (i) determining points of the lines which lie on a perimeter boundary about the series of lines (ii) establishing with the determine points trapezoidal areas within and including the perimeter boundary, and (iii) setting pixels in a pattern corresponding to the established trapezoidal areas.

As a result, the images of brushed strokes are displayed on the video display unit without noticeable delay and provide for proper eye hand coordination of the user. To that end, the user is able to write as he/she would with pen and ink.

### Brief Description of the Drawings

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.

Figure 1a is a schematic view of a data processing system which embodies the present invention.

Figure 1b is a longitudinal section of a stylus employed in the data processing system of Figure la which may be cordless or wired to a tablet of the system.

Figure 1c is a block diagram of a tablet employed in the system of Figure 1a.

Figure 2a is a schematic diagram of a tear-shaped primitive employed in images of brushed strokes created in the system of Figure 1a.

Figure 2b is a schematic diagram of a brushed stroke segment formed by two successive points generated during the operation of the stylus on the tablet in the system of Figure 1a.

Figure 2c is a schematic diagram of the filling of a brushed stroke by a polygon fill routine performed in the system of Figure 1a.

Figures 2d-2e are schematic illustrations of the formation of imaged strokes in the system of Figure 1a.

Figure 3 is an illustration of a graph view displayed in the system of Figure la for user establishment of the relationship between detected force and image stroke width.

Figure 4 is a block diagram of a network of data processing systems which embody the present invention.

Figure 5 is a diagram illustrating the successive stages of data transformation accomplished by a series of processes in the software support of the present invention.

### Detailed Description of the Preferred Embodiment

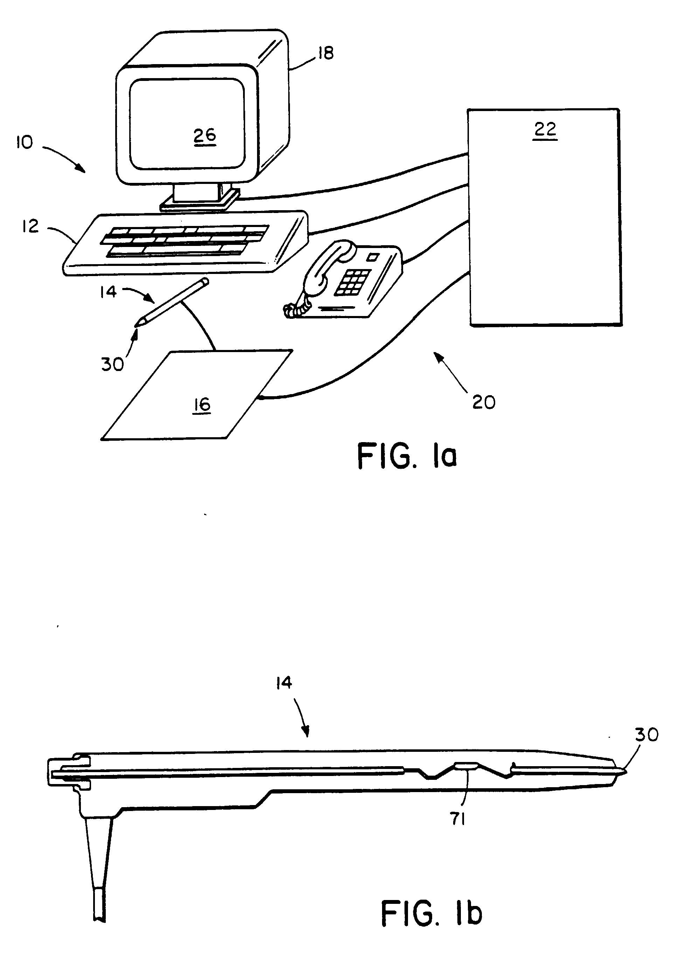

As illustrated in Figure 1a, a data processing system 20 according to the present invention includes a computer terminal 10 with a keyboard 12 and a display unit 18, an electronic stylus 14 and an electronic tablet 16, all of which are connected to and driven by a digital processor 22. Digital processor 22 is an Intel 80286 processor with added memory and a separate graphics processor (for example, a Texas Instrument 34010 graphics processor coupled to display unit 18), but it is understood that other processors of a single-tasking type may be used.

The stylus 14 is operated on a upper planar surface of tablet 16 in a manner that a calligraphy brush is used on a piece of paper. The strokes of the stylus 14 on the surface of the tablet are displayed on the display unit 18. That is, while the user applies stylus 14 in a brush imitating manner to the tablet surface, image representations of brushed strokes corresponding to the user's actions with the stylus are provided in the view 26 of display unit 18.

Further, the positions in the plane of the tablet surface correspond to positions in the plane of view 26 displayed on display unit 18. That is, stylus 14 operation on the upper left hand corner of the tablet surface produces brushed stroke images in the upper left hand corner of screen view 26, and stylus operation on the lower right hand corner of tablet surface produces brushed stroke images in the lower right hand corner of screen view 26, and so forth.

The geometric characteristics (e.g. size, orientation, shape) of each brushed stroke image displayed on display unit 18 in response to stylus operation on tablet 16 are processor determined from measurable aspects of stylus operation. These measurable aspects included x and y position of the stylus 14 on the tablet 16, force exerted between the stylus and tablet during operation of the stylus, direction of movement of the stylus in the plane of the table surface, length of time of stylus contact with the tablet surface, and distance the stylus has traversed while in contact with the tablet surface. Different ones of these measurable aspects or combinations of two or more thereof are used to define the different geometric characteristics of the brushed stroke images. As a result, the displayed images of brushed strokes are generated as a function of stylus operation in a brush imitating manner. To that end, the data processing system of the present invention provides an apparatus and method for inputting calligraphy characters into a computer system and for doing so in a manner which emulates pen and ink writing.

In a preferred embodiment, detected force exerted between the stylus 14 and tablet surface determines the shape and width of the brushed stroke images displayed on display unit 18. Hence, the displayed images of brushed strokes correspond to strokes expected by the user for the force sensitive operation of a pen/brush (stylus 14) on a writing surface (tablet 16).

To accomplish the foregoing, the tablet 16 includes a grid of conductive elements (wires), and the electronic stylus 14 contains an electric coil (not shown) and a force transducer 71 (Figure 1b). Generally, the coil in the stylus 14 is inductively coupled to the grid in the tablet by energizing either the coil or the grid with an AC voltage signal. The voltage signal induced in the other component is then measured and used to determine the position of the stylus relative to the various grid wires. This provides the position of the stylus in the plane of the tablet surface.

Preferably, the conductive elements of the tablet grid include (i) and x- and y-axis sampling circuit, where x and y are orthogonal axes in the plane of the tablet surface and (ii) a separate z-axis is perpendicular to the tablet surface. To that end, while the x- and y-axis sampling circuit of the tablet grid determine position of the stylus in the plane of the tablet surface, the tablet grid z-axis sampling circuit determines distance between the stylus 14 and tablet surface along an axis perpendicular to the plane of the tablet surface.

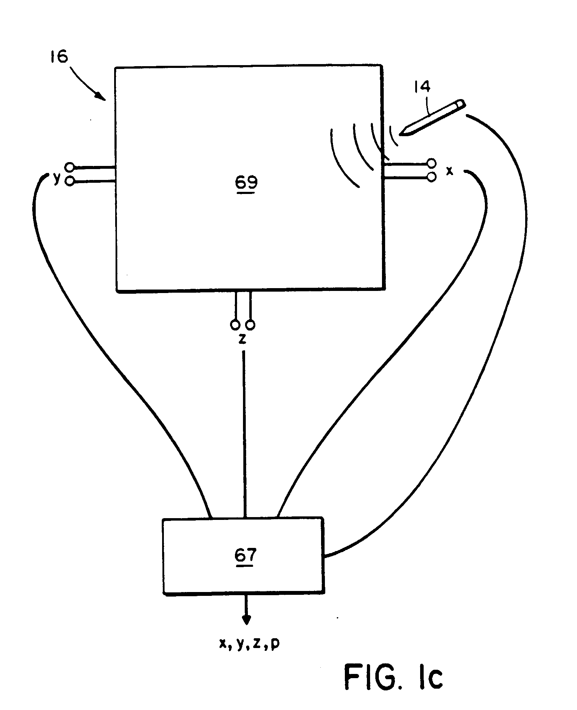

It is understood that a multiplicity of loop configurations for the sensing coils forming the x and y and the z sampling circuit are known in the art. Hence, Figure 1c provides a block diagram of tablet 16 with blocked area 69 generally referring to the sensing coils of the x and y and z sampling circuits. It is noted, however, that positional phase discrepancies of the tablet sensing coils can be corrected computationally in tablet processor 67 or by a higher resolution loop such as a separate z-axis sensing loop used in the present invention.

The x- and y- axis and z-axis sampling circuits operate on a predetermined schedule and generate signals at x, y and z in Figure 1c. The signals are subsequently received and digitized into respective quantitative values by tablet processor 67. The digitized values are used by processor 22 in Figure 1a to provide an indication of position of the stylus 14 relative to the tablet 16 along the x, y and z axes.

In addition, force measurements p are generated from a force transducer 71 (Figure 1b) in the stylus 14. Force measurements p indicate force exerted between the stylus end 30 and tablet surface. For each received set of x, y and z signals from the sampling circuits, tablet processor 67 samples force transduces 71 for a force measurement p and digitizes the p measurement. Subsequently, table processor 67 transmits to processor 22 a data packet formed of an x-and y-axis value, a corresponding z-axis value and a corresponding p measurement. The processor 22 used the transferred height (z-axis) and force (p) values to determine proximity of the stylus end 30 in relation to the tablet surface as follows.

For stylus end 30 at a height greater than about 2 cm above the tablet surface (i.e. z-axis value greater than 0 and p=0), tablet processor 67 does not encode nor transmit data packets to processor 22. Thereupon, processor 22 refrains from displaying a cursor for stylus end 30 in the screen view 26 on display unit 18.

For stylus end 30 at a height of about 2 cm or less above the tablet surface but not in contact therewith (i.e. z-axis value greater than 0 and p=0), processor 22 determines stylus end 30 to be in the working range in which a user holds the stylus 14 during operation thereof above tablet 16 between strokes. Hence, processor 22 displays on display unit 18 a cursor indicative of x-y position of the stylus end 30 with respect to the tablet 16 and, consequently, where a stroke will begin if and when the stylus end 30 makes contact with the tablet surface. Processor 22 continues to receive data packets from tablet processor 67 and continues to display the cursor in a screen position which corresponds to position of stylus end 30 relative to the tablet surface, as long as stylus end 30 is determined, by virtue of a received data packet, to be within the working range.

For stylus end 30 in contact with the tablet surface (i.e. z-axis value is zero and/or p is a positive non-zero value), processor 22 determines that stylus end 30 is being operated on the tablet surface. Hence, processor 22 operates in a pen-down mode supported by a pen-down software procedure discussed in the related patent application. During this mode, as the user moves the stylus 14 from one point to the next on the tablet surface, while maintaing stylus contact with the tablet surface and possibly varying force exerted between the stylus end and tablet surface, processor 22 receives data packets from the tablet processor 67. Each data packet has the form (x, y, z, p) of integer values defined at each processor sampling of the x- and y-axis circuit, z-axis circuit and force transducer 71. Approximate ranges of the values are x and y between 0 and 10,000 inclusive, and z and p between 0 and 255 inclusive.

In response, for each (x, y, z p) data packet, processor 22 establishes a drawing primitive centered at the (x, y) position sensed in the tablet plane and having a shape (including width) defined as a function of the sensed pressure p. A closely coupled sequence or series of drawing primitives results and forms the skeletal structure of the brushed stroke representative of stylus operation on the tablet 16.

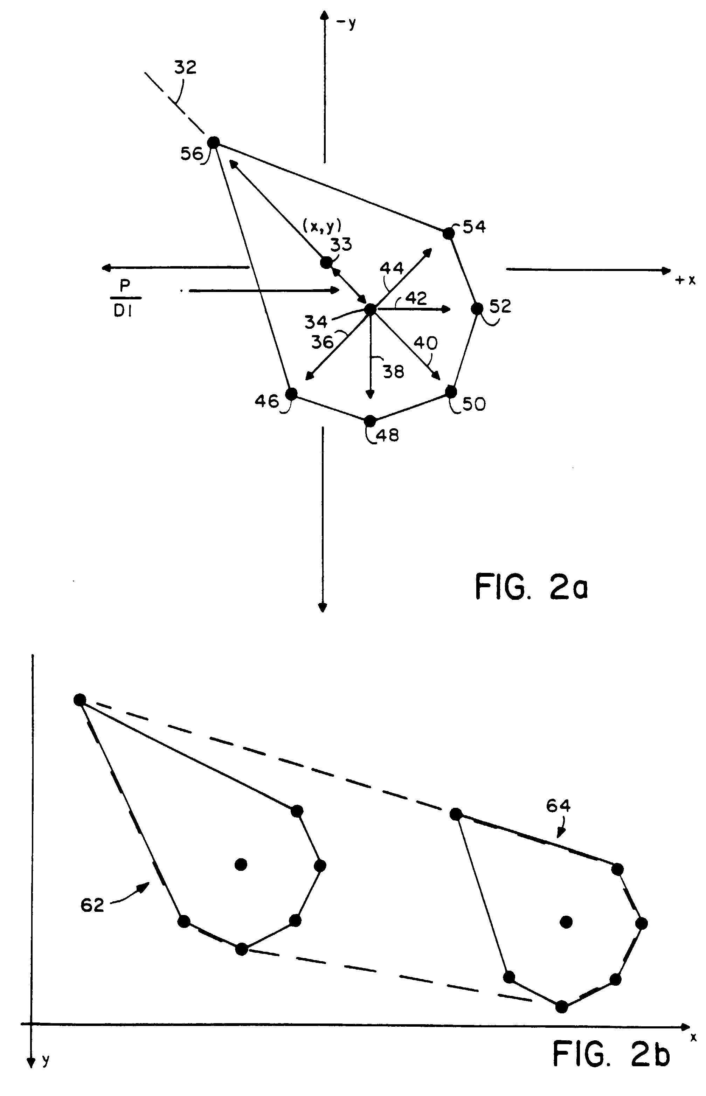

In a preferred embodiment for Eastern style calligraphy, the drawing primitive is a polygon approximately a teardrop shape 82 which is symmetrical about a line 32 that forms a 135° angle with the right hand horizontal in a Cartesian x, y plane as illustrated in Figures 2a-2b. For a received (x, y, z, p) data packet, the teardrop shape 82 is centered at the (x, y) sample point 33 and has six circumferential shape defining points (i.e. six points for approximately the teardrop shape). Each of the six points is defined as a function of sensed force.

In particular, stylus force transducer 71 detects force exerted in the range 0-500 grams of force. Processor 22 receives an indicative signal of sensed force and scales the sensed force value to an integer value in the range 0-255. The scaled force value is divided by a positive, non-zero constant D1. A distance equal to this quotient is traversed downward from point 33 along center line 32 of the teardrop shape 82, to define lower center point 34. D1 is user definable and preferably an integer.

From lower center point 34 of the teardrop shape 82, five of the six circumferential shape defining points are determined along respective radial axes 36, 38, 40, 42 and 44, which respectively, form angles of 225°, 270°, 315°, 0° and 45° with the right hand horizontal of the Cartesian x, y plane. Circumferential shape defining point 46 lies along radial axis 36, a distance from the lower center point 34, equal to (scaled force + c1)/D1. Circumferential shape defining point 48 lies along radial axis 38, a distance from the lower center point 34, equal to (scaled force + c2)/D1. Circumferential shape defining point 50 lies along radial axis 40, a distance from the lower center point 34, equal to (scaled force + C3)/D1. Circumferential shape defining point 52 lies along radial axis 42, a distance from the lower center point 34, equal to (scaled force + C4)/D1. Circumferential shape defining point 54 lies along radial axis 44, a distance from the lower center point 34, equal to (scaled force + C5)/D1. Constants C1 through C5 are user definable integers in the range 1 to about 10.

The sixth circumferential shape defining point 56 of the teardrop shape 82 is established with respect to the (x, y) position 33 given in the data packet. From that point, a distance equal to (scaled force + C6)/D2 is traversed upward along the center line 32 of the teardrop shape. Constant D1 is a multiple of Constant D2 which is user definable. Constant C6 is a user definable integer in the range of the other Cn constrants.

It is noted that each circumferential shape defining point is determine with a respective Cn constant independent of and different from the other Cn constants. This allows the shape/widths of successive teardrop shape drawing primitives to increase or decrease in a staggered manner as detected force changes. In turn, processor 22 produces brushed strokes with a larger number of small changes in size and shape rather than a smaller number or large and noticeable changes.

By way of illustration and not limitation, the values for the Cn and Dn constants in one embodiment are as follows: D1=12, D2-4, C1-8, C2=6, C3=10, C4=9, C5=7, and C6=10. The values for the Cn constants are chosen such that each successive constant has a value different from the value of the preceeding constant.

In another embodiment, for Western style calligraphy, the drawing primitive is a straight line of variable (force-determined) length and predetermined orientation with respect to the right hand horizontal of a Cartesian x, y plane. A preferred angle of orientation is +45° from the right hand origin 0° in the Cartesian coordinate system. In the embodiment for Western style calligraphy, for each (x, y, z p) data packet which the processor receives processor 22 centers the line at the given (x, y) position and establishes width and length of the line as a function of p scaled as described above.

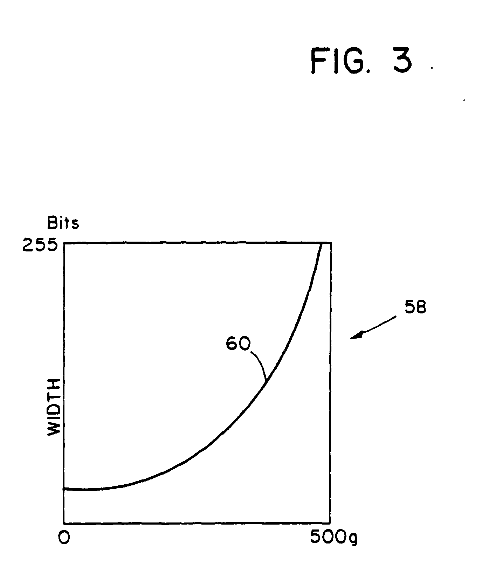

In addition to allowing the user to define constants Cn and Dn that determine the relationship between sensed force and primitive shape and, hence, stroke width, the present invention allows the user to interactively define the function for scaling force (i.e. for determining the scaled force value from sensed force value). This is accomplished through a menu selection, function key or command which enables the user to request a stroke width versus sensed force graph to be displayed on display unit 18. Such a graph is illustrated in Figure 3.

With the stylus 14, the user draws on the tablet surface, in the position corresponding to the screen position of the displayed graph 58, a desired curve 60 to define the relationship between sensed force and image stroke width. From the user drawn curve 60, processor 22 forms a table which maps the force axis values to corresponding width axis values of the points of the user provided curve. During processing of a drawing primitive from a received data packet, processor 22 performs a table lookup with the given p value of the data packet for the force axis value, and therefrom defines the scaled force value to equal the corresponding width axis value found in the table. This scaled force value is then used as described previously to determine the shape and width of the drawing primitive.

Whatever drawing primitive is employed, the processor 22 performs a fast polygon fill procedure to fill spaces (i.e. set pixels) between successive drawing primitives and within each drawing primitive, in a series of drawing primitives which define a brushed stroke indicative of user operation of the stylus on table 16. Specifically, aft after the circumferential shape defining points of a drawing primitive 62, and hence the perimeter or convex hull of a drawing primitive, are determined, processor 22 sorts the points in increasing Y order according to the orthogonal x, y axes of the screen view for display unit 18 as illustrated in Figure 2b. Duplicate points are deleted, and points with he same y value are culled (i.e. of these only the point having the left most x value and, if distinct, the point having the right most x value are kept). The points which remain are used as input to call an N point Polygon Fill routine described later, which fills the current drawing primitive 62 (sets points therein).

As the user moves the stylus, maintining the stylus end 30 in contact with the tablet surface, to a new position, a new tablet data packet is determined. In turn, a new drawing primitive 64 is derived using the x, y, z and p values of the new data packet and the predetermined Cn and Dn constant values as described above. The points of the former drawing primitive 62 and that of the new drawing primitive 64 are each sorted in the manner stated above. The remaining sorted points from both drawing primitives are merge sorted to form a list of sorted points. The list of sorted points is used to input to call the N point Polygon Fill routine to fill the convex hull of the combination of the two drawing primitives 62, 64, where the convex hull is determined from the points of the list with the left most and/or right most x values for each represented y level. That is, these points are the points the former and new drawing primitives 62, 64 respectively which form a perimeter boundary about the two drawing primitives illustrated by the broken line in Figure 2b.

The foregoing is repeated from point to point of a user generated stroke of the stylus 14 on the tablet 16 (i.e. during the time when operation of the stylus maintains stylus end contact with the tablet surface) to generate an image of a brushed stroke in the screen view of display unit 18. As the stylus 14 moves from point to point of a stylus stroke (maintaining stylus contact with the tablet surface), the last drawing primitive is saved and used in conjunction with the current/new drawing primitive based on the most recently received data packet, to determine the brushed stroke indicative of the current user generated stylus stroke.

The filling of the brushed stroke section between established drawing primitives and, hence, between data packets, occurs within five milliseconds, which is the time between tablet data points at the fastest data rate possible. Because most calligraphy is performed at a somewhat slower pace than normal handwriting, and because of the importance placed on stroke quality, two hundred samples per second (with a 5 millisecond fill time) is sufficient sampling speed, but is slow enough to compute and fill the current stroke path by the methods here described. This level of temporal resolution (200 points per second) gives very realistic calligrapahy stroke feedback and is within the acceptable level for handwriting at normal speeds as described by M.J. Phillips in "Several Simple Steps Can Help You Choose the Correct Digitizer", Computer Technology Review, Volume 7, No. 1, January 1987.

If 200 samples per second is insufficient (for reason of polygonal features that result ffromquickly executed curves), then artificial points may be generated and used as if part f the input data string (data packets). Such points may conveniently be computed by "spline curve" generation, a means well known of practitioners of computer graphics for drawing smooth curves through series of discrete points.

Also if the computational means is not always fast enough to compute one point's consequences before the next point arrives, then it may be arranged that the points (or slightly processed consequences of them) are put into a first in first out queue from which the processor 22 works to keep up as it is best able to do so. Thus, no input pionts (data packets) are lost and the only noticeable effect of temporary overload is slight momentary delay in the visual feedback through display unit 18. Alternatively, the software support for the present invention allows the user to slow the tablet data rate as desired through keyboard input, and is advantageous in the case where larger or more complicated geometric shapes are used for the drawing primitive.

Further, Applicants have discovered that a teardrop shape centered about the line which forms a 135° angle-with the right hand horizontal of a Cartesian x, y plane most closely resembles the area of contact made with a calligraphy brush on a subject surface, at one moment in time, in Eastern style calligraphy. During use, the brush bristles, spread with increased applied force to form wider teardrop areas of contact. Conversely with a lifting of the brush less bristles contact the writing surface and form narrower teardrop areas of contact. The area of contact in the drawing of a calligraphy stroke is thus most closely resembled by a series of teardrop shapes of different widths and/or lengths. To that end, the present invention generates images of desired stylus strokes by forming a series of teardrop shaped primitives along the path of stylus 14 contact on the tablet surface and by changing width and/or length of the teardrop shape as a function of force exerted between the stylus and the tablet surface.

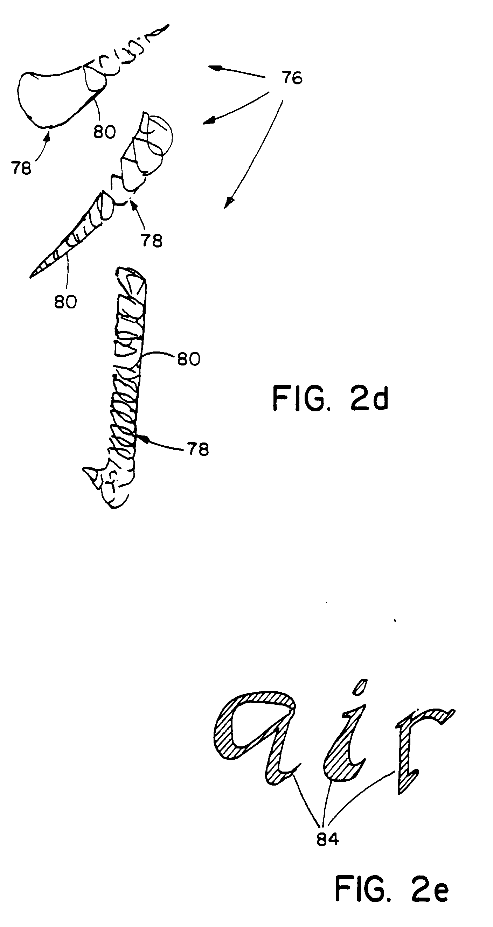

Figure 2d illustrates images of calligraphied strokes generated by one embodiments of the present invention. Each imaged stroke 76 is a series of teardrop shaped primitives 78 oriented about the line which forms 135° with the right hand horizontal of the Cartesian x, y plane. The teardrop shaped primitives 78 in a series have different widths and/or lengths to generally form the head, body and tail of the imaged stroke 76. More specifically, the convex hull defined by a series of teardrop shaped primitives 78 is filled by the N point Polygon Fill routine to establish an image stroke displayed on the display unit 18 in the present invention.

Figure 2e illustrates images of Western calligraphied characters generated by another embodiment of the present invention. Each character image is formed by a series of line primitives 84 based on the same principles as the above described imaged strokes 76 of Figure 2b. These imaged characters are representative of characters generated by a rigid broad end pen type brush with pen and ink. Hence, the present invention provides a computer driven stylus which provides real time brush operation comparable to practiced brush and ink calligraphy.

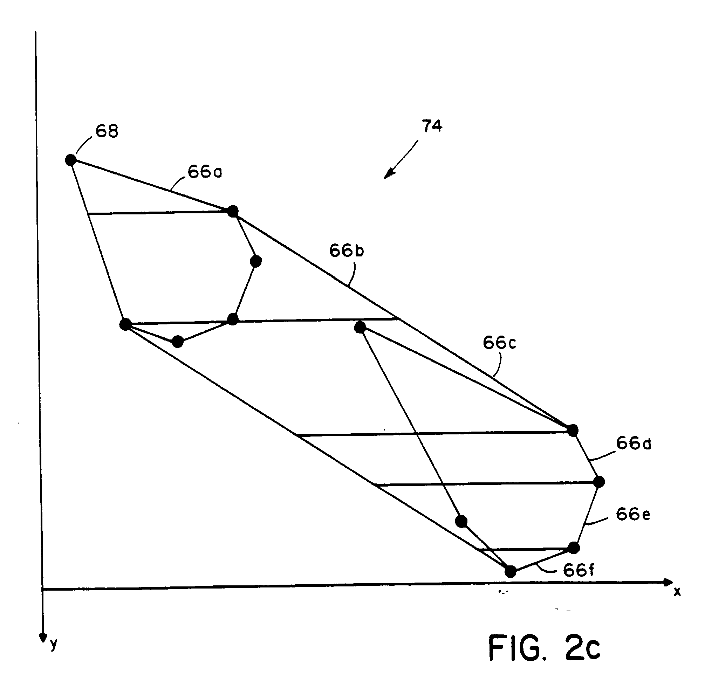

The N point Polygon Fill routine is outlined in Table I. The routine requires input of an integer number of points and a pointer to the array holding the convex hull (polygon perimeter) points or addresses thereof. Starting at the smallest Y level point 68 (Y increases downward in Figure 2c) of the subject convex hull 74, the routine divides the convex hull into constituent trapezoids 66a-66f as illustrated in Figure 2c. Each trapezoid 66 consists of one or two points on each of one or two possible y levels. And, each trapezoid 66 has a horizontal top at a y level of one point of the convex hull and a horizontal bottom at a y value of another point of the convex hull. The point of the convex hull which defines the bottom horizontal of a trapezoid 66, is the point which makes the right most or left most slope with the right most or left most point, respectively, of the top horizontal of the trapezoid. With each constituent trapezoid 66, the routine calls a trapezoid fill routine, which fills the trapezoid with horizontal lines using Bresenham's line algorithm to determine the successive line end points.

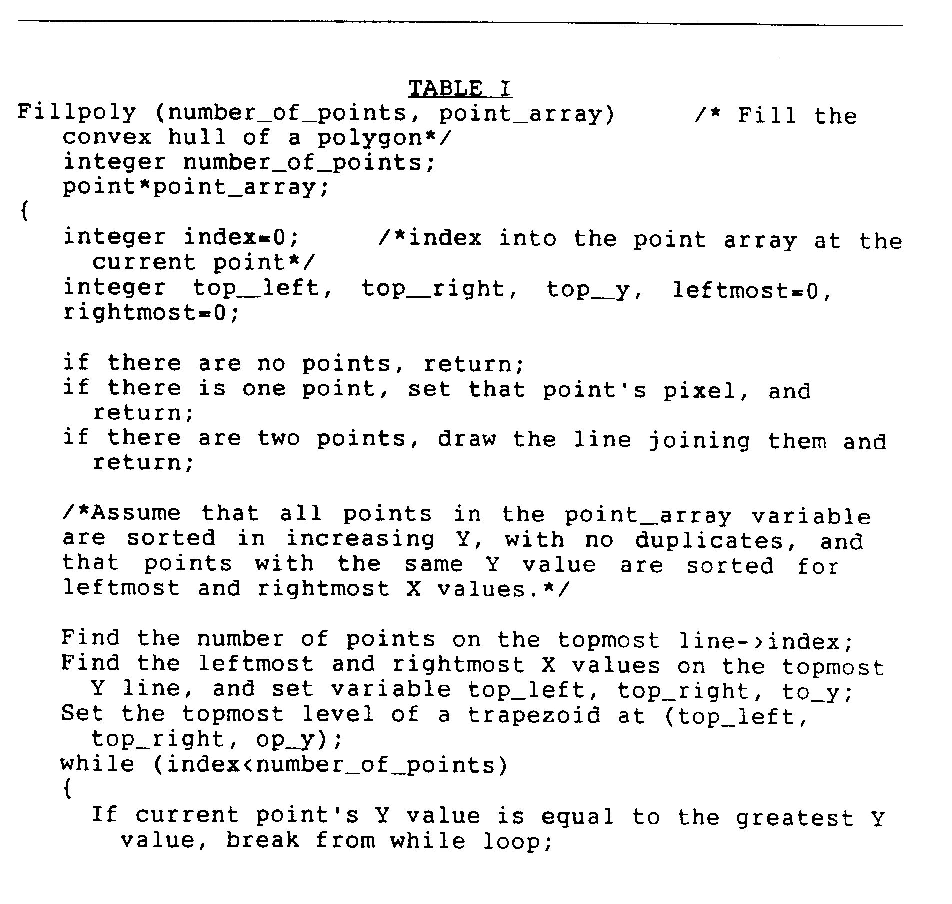

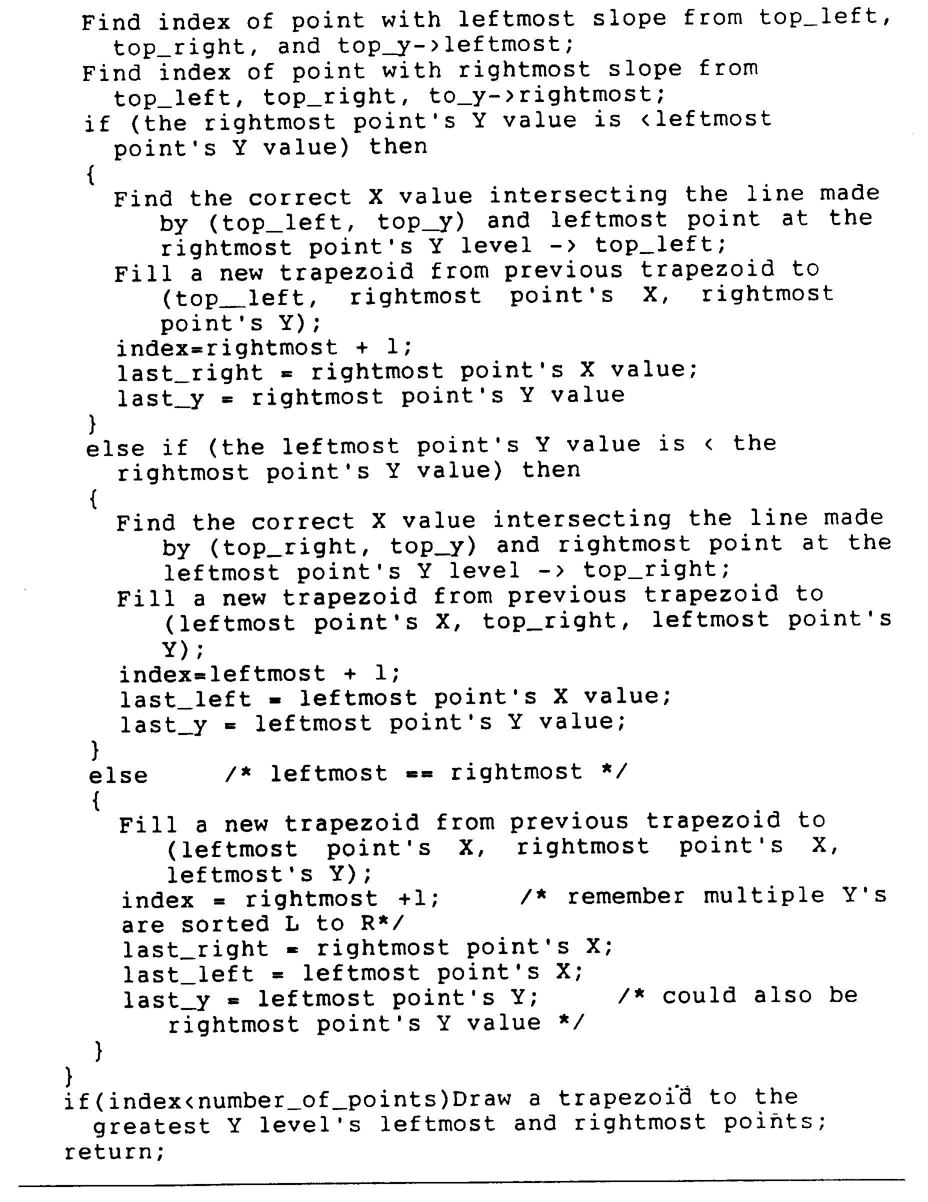

From the filled convex hulls (i.e. convent hulls whose inner points and boundary points are set), processor 22 sets bits of a bitmap, or raster lines or the like, to display on display unit 18 an image of the created brushed stroke. The speed of the fast polygonal fill procedure enables real time brushed strokes (i.e. images thereof) to be created on the display unit 18 in response to user operation of the stylus 14 on the table 16 in a brush imitating manner. To prevent stray marks or line segments from appearing on the created brushed strokes, the processor 22 does not draw primitives for data points with detected zero force values. Thus very slow transition from pen down to pen up or vice versa do not leave traces during the zero force episode.

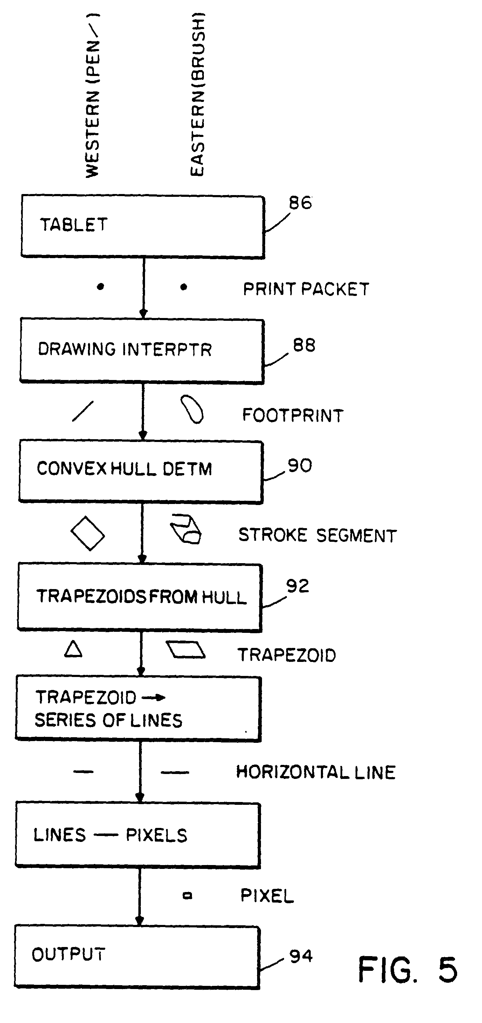

Figure 5 illustrates program modules for implementing the foregoing in a software program which supports the data processing system of the present invention. A tablet module 86 enables table processor 67 to collect data from tablet 16 and stylus 14 and to therefrom generate the (x, y, z, p) data packets for each sample point. Drawing interpreter module 88 in processor 22 receives data packets from tablet module 86 and defines a primitive for each sample point (data packet) as described previously with respect to constants Cn and Dn and the like. Module 90 determines the convex hull of one or two primitives. As described previously, module 90 accomplishes this by sorting routine. From module 90 a module 92 is called to (i) divide the convex hull into trapezoids, (ii) divide each trapezoid into a series of horizontal lines, and (iii) set the pixels defining each line. Module 92 includes the N point Polygon Fill routine of Table I. From module 92, an output module 94 receives an indication of the pixels which when set provide the desired image of a brushed stroke indicative of user operation of the stylus 14 on tablet 16.

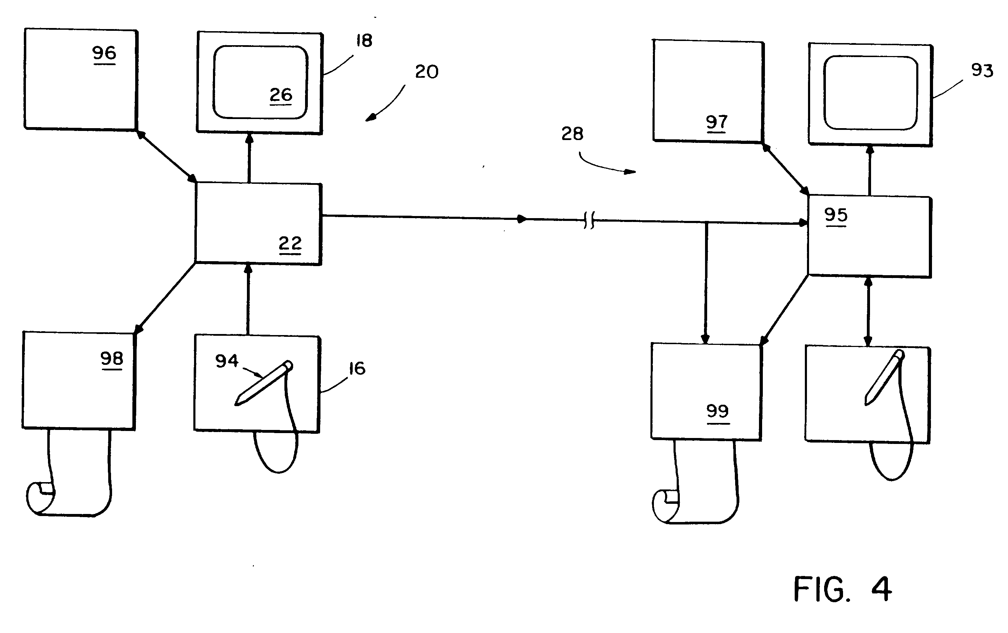

The output module 94 not only supports local screen view 26 (Figure 1a) but also enables other local and/or remote output as illustrated in Figure 4. Within the local data processing system 20, module 94 also enables processor 22 to store the brushed stroke image (pixel) information in local, non-volatile memory 96, and to print hard copy output on a local printer 98. External to the local data processing system 20 (i.e. in a network of processing systems), module 94 enables processor 22 to transmit bitmaps, (x, y, z, p) data packets and delimiters, trapezoids, or individual pixel information, or the like to a remote processing station 28 or partial one thereof. In remote processing station 28, a remote processor 95 supported by a similar output module 94 receives the data. In turn, remote processor 95 stores the received data in memory 97 local to processor 95, displays images from the received data on a display unit 93 local to processor 95, and/or prints hard copy output on a printer 99 local to processor 95. It is understood that the remote devices are mentioned in the alternative such that any of the devices may be coupled to remote processor 95 to form remote processing station 28.

It is noted that tht hard copy output (local or remote) is typically of higher resolution than the interactive screen display. A longer processing time, probably required for this and higher resolution, for this output does not pose further problems (of the type discussed previously) because the hard copy output does not need to be generated in real time.

While the invention has been particularly shown and described with reference to a preferred embodiment thereof, it will be understood by those skilled in the art that various changes in form and details may be made therein without departing from the scope of the invention as defined by the appended claims.

For example, the line about which the drawing primitive is centered by continuously rotating through 360° of a Cartesian x-y plane. This produces a change in orientation of image stroke. That is, the position of narrowing stroke parts changes according to the change in angle of the rotating center line. To that end, the resulting image stroke displayed on the display unit replicates the western calligraphic ink strokes formed by the calligrapher twisting the brush/pen between his/her fingers while he/she writes. Software for continuously rotating the center line includes a loop which changes angle of the center line from 0° through 360°.

As another example, the number of points constituting the convex hull of the drawing primitive can be any value, not necessarily 6 as described above. This results in a another curved convex hull, for example an approximate circle which might be appropriate in a computer model of a felt tip pen.

In another example, a stylus 14 may enable erasure of strokes Erasure by stylus 14 is accomplished by
(i) providing an erasure mode for stylus end (either working end) contact to the tablet surface upon user command
(ii) forcing to white, instead of black, of the pixels of an imaged brush stroke as the stylus end traverses over corresponding parts of the imaged brush stroke; and
(iii) forcing to white a wider band of set pixels as a function of detected user applied force.

## Claims

1. Computer writing apparatus for brush style writing having:
a video display unit supported by a bitmap;
a stylus operable on a working surface in a brush imitating manner, one of the stylus and the working surface generating signals indicative of brush imitating operation of the stylus on the working surface; and
processor means coupled between the stylus and the video display unit for receiving signals indicative of a brush imitating operation of the stylus and generated by one of the stylus and the working surface, the processor means establishing from the signals images of brushed strokes corresponding to the brush imitating operation of the stylus for display on the video display unit, width of the brushed strokes varying as a function of force of the stylus on the working surface, each brushed stroke image being formed of a series of certain shaped elements, shape and size of the certain shaped elements varying as a function of force and direction of movement of the stylus on the working surface, each certain shaped element having a plurality of points for enabling staggered changes between elements, the apparatus further characterized by:
the processor means forming each brushed stroke image on the video display bit map by (i) determining points of the certain shaped elements which lie on a perimeter boundary about the series of certain shaped elements, (ii) establishing with the determined points trapezoidal areas within and including the perimeter boundary, and (iii) setting scan lines of pixels in a pattern corresponding to the established trapezoidal areas, such that the processor means drives the video display unit to display the established images of brushed strokes in real-time on the video display unit during stylus operation on the working surface.

2. Computer writing apparatus as claimed in Claim 1 further comprising a graph view displayable on the display unit; and
wherein the signals generated by one of the stylus and the working surface includes a force signal for indicating force exerted between the stylus and working surface throughout operation of the stylus such that the processor means provides images of brushed strokes with widths that vary as a function of force, the graph view enabling user definition of the function of force to brushed stroke width.

3. Computer writing apparatus as claimed in Claim 1 wherein geometric characteristics of the brushed strokes further includes orientation of the brushed strokes.

4. Computer writing apparatus as claimed in Claim 1 wherein the processor means establishes brushed strokes having geometric characteristics including shape and size that vary as a function of operation of the stylus, in addition to force, including at least one of (i) direction of stylus movement on the working surface, (ii) length of time of contact between the stylus and working surface, (iii) distance traversed on the working surface while contact is made between the stylus and the working surface, (iv) position of the stylus on the working surface, (v) tilt of stylus with respect to the plane of the working surfaces, and (vi) orientation of the stylus on the working surface.

5. Computer writing apparatus as claimed in Claim 1 wherein the certain shaped elements are teardrop shaped elements and each teardrop shaped element is defined by a plurality of points, each point being defined by a respective predetermined constant value, different points being defined by different predetermined constant values such that the teardrop shaped elements in a series have different lengths and widths.

6. Computer writing apparatus as claimed in Claim 5 wherein the predetermined constant values are user predefinable.

7. Computer writing apparatus as claimed in Claim 1 wherein the certain shaped elements are lines of a variable length.

8. Computer writing apparatus as claimed in Claim 1, further comprising:
force detecting means coupled to the processor for detecting force exerted between the stylus and the working surface during brush imitating operation of the stylus; and
wherein the processor means receives the signals indicative of brush imitating operation of the stylus in combination with respective detected forces, and establishes therefrom the images of brushed strokes, each brushed stroke having a shape and a size determined as a function of detected force of the respective brush imitating operation of the stylus.

9. Computer writing apparatus as claimed in Claim 5 wherein the certain shaped elements are fixed orientation teardrop shaped elements, and length and width of each teardrop shaped element varies independently as a function of force of the stylus on the working surface.

## Patentansprüche

1. Rechner-Schreibvorrichtung für pinselmodelliertes Schreiben, mit
- einer von einer Bitmap unterstützten Bildschirmeinheit,
- einem auf einer Arbeitsfläche in pinselimitierender Weise benutzbaren Griffel, wobei der Griffel oder die Arbeitsfläche die pinselimitierende Betätigung des Griffels auf der Arbeitsfläche anzeigende Signale erzeugt, und
- einer Prozessoreinrichtung, die mit dem Griffel und der Bildschirmeinheit verbunden ist zum Empfangen von Signalen, die eine pinselimitierende Betätigung des Griffels anzeigen und vom Griffel oder von der Arbeitsfläche erzeugt werden, wobei die Prozessoreinrichtung aus den Signalen Bilder von Pinselstrichen, die der pinselimitierenden Betätigung des Griffel entsprechen, zur Anzeige an der Bildschirmeinheit erstellt, die Breite der Pinselstriche abhängig von der vom Griffel auf die Arbeitsfläche ausgeübten Kraft veränderlich ist, jedes Pinselstrichbild von einer Reihe von bestimmten gestalteten Elementen gebildet ist, deren Gestalt und Größe abhängig von der vom Griffel auf die Arbeitsfläche ausgeübten Kraft und von seiner Bewegungsrichtung auf der Arbeitsfläche veränderlich sind, jedes bestimmte gestaltete Element eine Vielzahl von Punkten aufweist, die Veränderungen zwischen Elementen durch Versetzen ermöglichen,
wobei die Vorrichtung ferner durch den Umstand gekennzeichnet ist, daß
die Prozessoreinrichtung jedes Pinselstrichbild auf der Bildschirm-Bitmap bildet durch (i) Bestimmen von Punkten der bestimmten gestalteten Elemente, die auf einer äußeren Begrenzung um die Reihe bestimmter gestalteter Elemente liegen, (ii) Herstellen trapezförmiger Flächen anhand der bestimmten Punkte innerhalb und einschließlich der äußeren Begrenzung, und (iii) Einstellen von Pixel-Abtastzeilen in einem den erstellten trapezförmigen Flächen entsprechenden Muster, derart, daß die Prozessoreinrichtung die Bildschirmeinheit so steuert, daß sie die erzeugten Bilder von Pinselstrichen in Echtzeit auf der Bildschirmeinheit während der Griffelbetätigung auf der Arbeitsfläche anzeigt.

2. Rechner-Schreibvorrichtung nach Anspruch 1, ferner mit einer an der Anzeigeeinheit anzeigbaren grafischen Darstellung, und
bei der die vom Griffel oder von der Arbeitsfläche erzeugten Signale ein Kraftsignal enthalten, das eine zwischen dem Griffel und der Arbeitsfläche während der gesamten Betätigung des Griffels ausgeübte Kraft angibt, derart, daß die Prozessoreinrichtung Bilder von Pinselstrichen mit Breiten liefert, die abhängig von der Kraft veränderlich sind, wobei die grafische Darstellung eine Benutzerdefinition der Abhängigkeit zwischen der Kraft und der Breite des Pinselstrichs ermöglicht.

3. Rechner-Schreibvorrichtung nach Anspruch 1,
bei der geometrische Merkmale der Pinselstriche ferner die Ausrichtung der Pinselstriche umfassen.

4. Rechner-Schreibvorrichtung nach Anspruch 1,
bei der die Prozessoreinrichtung Pinselstriche erzeugt mit geometrischen Merkmalen, zu denen Gestalt und Größe gehören, die sich in Abhängigkeit von der Betätigung des Griffels verändern und zusätzlich zur Kraft wenigstens eines der Merkmale umfaßt: (i) Richtung der Griffelbewegung auf der Arbeitsfläche, (ii) Dauer der Berührung zwischen Griffel und Arbeitsfläche, (iii) zurückgelegte Strecke auf der Arbeitsfläche während zwischen Griffel und Arbeitsfläche Berührung besteht, (iv) Position des Griffels auf der Arbeitsfläche, (v) Schrägstellung des Griffels gegen die Ebene der Arbeitsfläche, und (vi) Ausrichtung des Griffels auf der Arbeitsfläche.

5. Rechner-Schreibvorrichtung nach Anspruch 1,
bei der die bestimmten gestalteten Elemente tränenförmig gestaltete Elemente sind und jedes tränenförmig gestaltete Element durch eine Vielzahl von Punkten definiert ist, von denen jeder durch einen zugehörigen vorbestimmten konstanten Wert definiert ist, wobei verschiedene Punkte durch verschiedene vorbestimmte konstante Werte bestimmt sind, derart, daß die tränenförmig gestalteten Elemente in einer Reihe verschiedene Längen und Breiten haben.

6. Rechner-Schreibvorrichtung nach Anspruch 5,
bei der die vorbestimmten konstanten Werte durch den Benutzer im voraus definierbar sind.

7. Rechner-Schreibvorrichtung nach Anspruch 1,
bei der die bestimmten gestalteten Elemente Linien von veränderbarer Länge sind.

8. Rechner-Schreibvorrichtung nach Anspruch 1, ferner mit
- einer mit dem Prozessor verbundenen Kraftfeststelleinrichtung zum Feststellen von zwischen dem Griffel und der Arbeitsfläche ausgeübter Kraft während der pinselimitierenden Betätigung des Griffels, und
- bei der die Prozessoreinrichtung die Signale empfängt, welche die pinselimitierende Betätigung des Griffels in Verbindung mit zugehörigen festgestellten Kräften anzeigen, und daraus die Bilder von Pinselstrichen erstellt, wobei jeder Pinselstrich von einer Gestalt und einer Größe ist, die abhängig von der festgestellten Kraft der entsprechenden pinselimitierenden Betätigung des Griffels bestimmt sind.

9. Rechner-Schreibvorrichtung nach Anspruch 5,
bei der die bestimmten gestalteten Elemente tränenförmig gestaltete Elemente von fester Ausrichtung sind und die Länge und die Breite jedes tränenförmig gestalteten Elementes sich unabhängig als Funktion der Kraft des Griffels auf die Arbeitsfläche verändern.

## Revendications

1. Dispositif d'écriture par ordinateur pour écrire dans un style d'écriture au pinceau comprenant :
une unité d'affichage vidéo assistée par un système de représentation en mode par points;
un stylet pouvant être actionné sur une surface de fonctionnement à la façon d'un pinceau, l'un du stylet et de la surface de fonctionnement générant des signaux représentatifs d'un actionnement à la façon d'un pinceau du stylet sur la surface de fonctionnement; et
des moyens de processeur connectés entre le stylet et l'unité d'affichage vidéo pour recevoir des signaux représentatifs d'un actionnement à la façon d'un pinceau du stylet et générés par l'un du stylet et de la surface de fonctionnement, les moyens de processeur élaborant à partir des signaux des images de traits de pinceau correspondant à l'actionnement à la façon d'un pinceau du stylet pour l'affichage sur l'unité d'affichage vidéo, la largeur des traits de pinceau variant selon une fonction de la pression du stylet sur la surface de fonctionnement, chaque image de trait de pinceau étant formée d'une série de certains éléments formés, la forme et la taille des certains éléments formés variant selon une fonction de la pression et de la direction du mouvement du stylet sur la surface de fonctionnement, chacun des certains éléments formés comprenant une pluralité de points pour permettre des transitions graduelles entre les éléments, le dispositif étant de plus caractérisé en ce que :
les moyens de processeur forment chaque image de trait de pinceau sur la représentation en mode par points de l'affichage vidéo en (i) déterminant des points des certains éléments formés qui se trouvent sur une limite périphérique entourant la série de certains éléments formés, (ii) constituant avec les points déterminés des zones trapézoïdales situées à l'intérieur de et comprenant la limite périphérique, et (iii) mettant à un des lignes de balayage de pixels suivant un motif correspondant aux zones trapézoïdales constituées, de façon que le processeur pilote l'unité d'affichage vidéo pour afficher les images de traits de pinceau constituées en temps réel sur l'unité d'affichage vidéo pendant l'actionnement du stylet sur la surface de fonctionnement.

2. Dispositif d'écriture par ordinateur selon la revendication 1 comprenant de plus une représentation graphique pouvant être affichée sur l'unité d'affichage; et
dans lequel les signaux générés par l'un du stylet et de la surface de fonctionnement comprennent un signal de pression pour indiquer la pression exercée entre le stylet et la surface de fonctionnement tout au long de l'actionnement du stylet de façon que les moyens de processeur fournissent des images de traits de pinceau ayant des largeurs qui varient selon une fonction de la pression, la représentation graphique permettant la définition par l'utilisateur de la fonction reliant la pression à la largeur d'un trait de pinceau.

3. Dispositif d'écriture par ordinateur selon la revendication 1 dans lequel les caractéristiques géométriques des traits de pinceau comprennent de plus l'orientation des traits de pinceau.

4. Dispositif d'écriture par ordinateur selon la revendication 1 dans lequel les moyens de processeur constituent des traits de pinceau ayant des caractéristiques géométriques comprenant la forme et la taille qui varient selon une fonction de l'actionnement du stylet, en plus de la pression, dont au moins l'une parmi les suivantes (i) la direction de déplacement du stylet sur la surface de fonctionnement, (ii) la durée du contact entre le stylet et la surface de fonctionnement, (iii) la distance parcourue sur la surface de fonctionnement pendant que le contact est réalisé entre le stylet et la surface de fonctionnement, (iv) la position du stylet sur la surface de fonctionnement, (v) l'inclinaison du stylet par rapport au plan des surfaces de fonctionnement , et (vi) l'orientation du stylet sur la surface de fonctionnement.

5. Dispositif d'écriture par ordinateur selon la revendication 1 dans lequel les certains éléments formés sont des éléments en forme de larmes et chaque élément en forme de larme est défini par une pluralité de points, chaque point étant défini par une valeur constante respective prédéterminée, des points différents étant définis par des valeurs constantes prédéterminées différentes de façon que les éléments en forme de larmes d'une série aient des longueurs et des largeurs différentes.

6. Dispositif d'écriture par ordinateur selon la revendication 5 dans lequel les valeurs constantes prédéterminées peuvent être définies au préalable par l'utilisateur.

7. Dispositif d'écriture par ordinateur selon la revendication 1 dans lequel les certains éléments formés sont des lignes de longueur variable.

8. Dispositif d'écriture par ordinateur selon la revendication 1, comprenant de plus :
des moyens de détection de pression couplés au processeur pour détecter la pression exercée entre le stylet et la surface de fonctionnement pendant l'actionnement à la façon d'un pinceau du stylet; et
dans lequel les moyens de processeur reçoivent des signaux représentatifs de l'actionnement à la façon d'un pinceau du stylet en combinaison avec des pressions détectées respectives, et constituent à partir de ces éléments les images de traits de pinceau, chaque trait de pinceau ayant une forme et une taille déterminées selon une fonction de la pression détectée de l'actionnement à la façon d'un pinceau respectif du stylet.

9. Dispositif d'écriture par ordinateur selon la revendication 5 dans lequel les certains éléments formés sont des éléments en forme de larmes d'orientation fixe, et la longueur et la largeur de chaque élément en forme de larme varient indépendamment selon une fonction de la pression du stylet sur la surface de fonctionnement.
